# EUROPÄISCHE PATENTSCHRIFT

(11) **EP 2 499 513 B1**
(45) Veröffentlichungstag und Bekanntmachung des Hinweises auf die Patenterteilung: **08.03.2017**
(21) Anmeldenummer: 10763642.5
(22) Anmeldetag: 22.09.2010
(51) Int. Cl.: G01S 7/524, B06B 1/02

(54) **VERFAHREN ZUM BETRIEB MINDESTENS EINES ULTRASCHALLWANDLERS**
METHOD FOR OPERATING AT LEAST ONE ULTRASONIC TRANSDUCER
PROCÉDÉ POUR FAIRE FONCTIONNER AU MOINS UN TRANSDUCTEUR ULTRASONORE

(30) Priorität: 09.11.2009 DE 102009046561
(43) Veröffentlichungstag der Anmeldung: 19.09.2012
(73) Patentinhaber: Robert Bosch GmbH, 70442 Stuttgart (DE)
(72) Erfinder: HUEFTLE, Gerhard, 71546 Aspach (DE); DAECKE, Dirk, 70619 Stuttgart (DE); OPITZ, Bernhard, 71229 Leonberg (DE); HORSTBRINK, Michael, 70469 Stuttgart-Feuerbach (DE); LANG, Tobias, 70197 Stuttgart (DE); KIESER, Ralf, 74379 Ingersheim (DE)
(86) Internationale Anmeldenummer: PCT/EP2010/063962
(87) Internationale Veröffentlichungsnummer: WO 2011/054597

(56) Entgegenhaltungen:
- EP-A2- 1 529 570
- EP-A2- 2 011 577
- US-A- 5 991 234

## Beschreibung

### Stand der Technik

Aus dem Stand der Technik sind Anordnungen bekannt, welche mindestens einen Ultraschallwandler aufweisen. Unter einem Ultraschallwandler wird dabei im Rahmen der vorliegenden Erfindung allgemein ein Element verstanden, welches eingerichtet ist, um elektrische Signale in Ultraschallsignale umzuwandeln oder umgekehrt. Beispiele derartiger Ultraschallwandler sind Vorrichtungen, welche elektrisch-akustische Wandlerelemente wie beispielsweise Piezoelemente umfassen.

Ultraschallwandler werden insbesondere im Bereich der Sensorik eingesetzt, beispielsweise in der Kraftfahrzeugtechnik, in der Verfahrenstechnik oder in anderen Bereichen der Naturwissenschaften, der Technik oder der Medizintechnik. Ein wichtiges Beispielsweise derartiger Ultraschallsensoren sind Ultraschall-Strömungsmesser, welche in der Regel zwei oder mehr Ultraschallwandler aufweisen und welche beispielsweise im Ansaug- oder Abgastrakt von Brennkraftmaschinen eingesetzt werden, um eine Strömungsrate von Gasen, beispielsweise Luft, zu erfassen. Diese Erfassung kann beispielsweise aufgrund von Laufzeitunterschieden erfolgen, aus welchen auf eine Strömungsgeschwindigkeit geschlossen werden kann.

Bei bekannten Ultraschallwandlern, insbesondere zum Einsatz in Sensorelementen mit mindestens einem, vorzugsweise zwei oder mehr Ultraschallwandlern, wird eine elektrische Anregungsfrequenz der Ultraschallwandler typischerweise fest vorgegeben. Aus US 6,508,134 B1 ist ein Sensorelement in Form eines Ultraschall-Strömungsmessers bekannt, welcher ein Paar von Ultraschallwandlern aufweist, welche abwechselnd als Transmitter und Empfänger verwendet werden. Dabei wird die elektrische Anregungsfrequenz der Ultraschallwandler derart nachgeregelt, dass eine Phasenverschiebung zwischen Sende- und Empfangssignal konstant gehalten wird Eine Reglung eines Ultraschallwandlers mit einem PLL-Regelkreis ist aus der EP 1 529 570 A2 bekannt.

Nach wie vor besteht jedoch die technische Herausforderung, dass Ultraschallwandler für eine optimale Signalamplitude und ein optimales Signal-zu-Rausch-Verhältnis oder auch für ein möglichst reziprokes Übertragungsverhalten in Sensorelementen mit mindestens einem Ultraschallwandler mit einer optimalen Anregungsfrequenz betrieben werden müssen. Diese optimale Anregungsfrequenz ist ihrerseits jedoch von Einflussgrößen abhängig, wie beispielsweise Umgebungsbedingungen, die auch wechseln können. So verändern beispielsweise Temperatureinflüsse die Resonanzfrequenz typischer Ultraschallwandler.

### Offenbarung der Erfindung

Es werden daher ein Verfahren zum Betrieb mindestens eines Ultraschallwandlers sowie eine Vorrichtung mit mindestens einem Ultraschallwandler vorgeschlagen, welche die Nachteile bekannter Verfahren und Vorrichtungen dieser Art zumindest weitgehend vermeiden. Das Verfahren kann insbesondere auch zum Betrieb mehrerer Ultraschallwandler eingesetzt werden oder zum Betrieb einer ganzen Sensoranordnung mit einem oder mehreren Ultraschallwandlern. Insbesondere kann das Verfahren zum Betrieb eines Ultraschall-Durchflussmessers eingesetzt werden oder zum Betrieb eines anderen System mit einem oder mehreren Ultraschallwandlern.

Das Verfahren beruht auf der Erkenntnis, dass die Frequenz eines Empfangssignals nicht notwendigerweise der Anregungsfrequenz des Ultraschallwandlers entspricht, mit welcher dieser zur Emission von Ultraschallwellen angeregt wird. So werden typische Ultraschallwandler mit einem oder mehreren Anregungspulsen zu einer Emission von Ultraschallwellen angeregt. Die Anregungspulse können neben der Anregungsfrequenz aufgrund der zeitlichen Limitierung weitere Frequenzanteile enthalten. Da der Ultraschallwandler selbst ein komplexes Schwingungssystem darstellt, kann die Frequenz der emittierten Ultraschallwellen von der Anregungsfrequenz abweichen, wobei diese Abweichung außerdem abhängig von weiteren Randbedingungen sein kann, wie z.B. einer Temperatur, einer Strömungsrate oder anderen Parametern. Weitere Abweichungen können sich aus der Übertragungsstrecke, über welche die Ultraschallwellen übertragen werden, ergeben. Wiederum weitere Abweichungen können sich durch Frequenzcharakteristika eines empfangenden Systems ergeben, beispielsweise eines zweiten Ultraschallwandlers. Beispielsweise besteht die Tendenz, dass höherfrequente Schwingungen mit einer höheren Richtwirkung abgestrahlt werden als niederfrequentere Schwingungen, so dass die von einem Ultraschallwandler tatsächlich emittierten Frequenzen abhängig von der jeweiligen Abstrahlrichtung innerhalb dessen Abstrahlcharakteristik sind. So kommt es beispielsweise in einem Durchflussmesser mit mindestens zwei Ultraschallwandlern in der Regel zu einer Verwehung der Ultraschallwellen durch das strömende Medium, so dass dann je nach Strömungsrate andere Bereiche innerhalb der Abstrahlcharakteristik und damit tendenziell andere Frequenzanteile zur Übertragung beitragen können. Diese gesamten Einflüsse werden im Folgenden als Einflüsse einer Übertragungsstrecke bezeichnet. Es zeigt sich, dass Empfangssignale, welche nach Durchlaufen dieser Übertragungsstrecke empfangen werden, eine Frequenz aufweisen können, welche hinsichtlich einer übertragenen Amplitude optimal ist und welche im Folgenden auch als Resonanzfrequenz des Ultraschallwandlers bezeichnet wird, auch wenn es sich hierbei um die Übertragungsfrequenz eines gesamten Systems handeln kann.

Insgesamt kann also bei einem derartigen System zwischen einer Vielzahl möglicher Frequenzen unterschieden werden. So ist zum einen die Resonanzfrequenz zu nennen. Bei dieser Frequenz handelt es sich um die Übertragungsfrequenz, bei welcher die Amplitude eines in dem System übertragenen Signals bei gleicher Sendestärke eine maximale Amplitude erreicht. Diese Frequenz wird in der Regel durch das Resonanzverhalten des emittierenden Ultraschallwandlers vorgegeben oder dominiert sein. Zusätzlich können jedoch, wie oben ausgeführt, auch Einflüsse der Übertragungsstrecke in die Resonanzfrequenz einfließen. Alternativ oder zusätzlich kann bei dieser Resonanzfrequenz auch eine optimale Übereinstimmung zwischen elektrisch gesendeter und empfangener Frequenz vorliegen. Wiederum alternativ oder zusätzlich kann die Resonanzfrequenz auch diejenige Frequenz des Systems sein, bei welcher eine Dirac-impulsförmige Anregung innerhalb eines Amplituden- und/oder Leistungsspektrums eines Empfangspulses ein Maximum oder einen Schwerpunkt aufweist.

Weiterhin ist die elektrisch gesendete Frequenz zu nennen. Diese ist die Frequenz, mit welcher der emittierende Ultraschallwandler tatsächlich elektrisch angeregt wird. Diese Frequenz wird im Folgenden auch als Anregungsfrequenz bezeichnet. Hierbei kann es sich um eine einzelne Frequenz oder auch um eine Mehrzahl von Frequenzen handeln.

Weiterhin ist die empfangene Frequenz zu nennen, welche im Folgenden auch als Empfangsfrequenz bezeichnet wird. Dies ist die Frequenz, eines Signals, welches der empfangende Ultraschallwandler tatsächlich aufnimmt, nachdem dieses Signal die Übertragungsstrecke durchlaufen hat. Wiederum kann es sich hierbei um eine einzelne Frequenz oder auch um eine Mehrzahl von Frequenzen handeln. Auch eine zeitliche Variation des Frequenzverlaufs ist möglich.

Weiterhin können sind je nach Art der Anregung des emittierenden Ultraschallwandlers und/oder nach Art der Auswertung des vom empfangenden Ultraschallwandlers aufgenommenen Signals weitere Frequenzen hinzutreten, beispielsweise modulierte und/oder demodulierte Frequenzen. So kann beispielsweise je nach Auswerteverfahren mindestens eine Demodulationsfrequenz hinzutreten, also eine Frequenz eines Signals, welches durch eine Demodulation der empfangenen Frequenz entsteht.

Es wird dementsprechend ein Verfahren zum Betrieb mindestens eines Ultraschallwandlers vorgeschlagen. Wie oben dargestellt, kann es sich bei dem mindestens einen Ultraschallwandler auch um ein System mehrerer Ultraschallwandler handeln. Der Ultraschallwandler wird bei dem Verfahren mit einer Anregungsfrequenz zu einer Emission von Ultraschallwellen angeregt. Insbesondere kann der Ultraschallwandler mittels eines Pulses angeregt werden. In diesem Fall handelt es sich bei der Anregungsfrequenz beispielsweise um eine Trägerfrequenz des Pulses, wobei im Frequenzspektrum des Anregungspulses auch weitere Frequenzen enthalten sein können.

Weiterhin wird mindestens ein Empfangssignal von mindestens einem Kontrollsensor erfasst. Bei dem Empfangssignal handelt es sich somit um ein Signal, welches auf die Emission von Ultraschallwellen des Ultraschallsensors zurückgeht, welches eine Übertragungsstrecke durchlaufen hat. Diese Übertragungsstrecke kann unterschiedlich ausgestaltet sein und ist durch das System vorgegeben. Beispielsweise kann diese Übertragungsstrecke neben dem emittierenden Ultraschallwandler weitere Komponenten umfassen, wie beispielsweise eine durchlaufene Strecke eines fluiden Mediums, beispielsweise eines Gases, insbesondere Luft, und/oder einen weiteren Ultraschallwandler, welcher das Empfangssignal aufnimmt. Sämtliche Komponenten der Übertragungsstrecke können Einfluss auf das Empfangssignal aufweisen.

Bei dem Kontrollsensor kann es sich grundsätzlich, wie unten noch näher ausgeführt wird, um einen beliebigen Sensor handeln, welcher das Empfangssignal aufnehmen kann. Insbesondere kann es sich dabei um einen zweiten Ultraschallwandler handeln. Alternativ oder zusätzlich kann der Kontrollsensor jedoch auch ganz oder teilweise bauteilidentisch mit dem emittierenden Ultraschallwandler sein, beispielsweise indem Puls-Antwort-Signale erfasst werden, insbesondere zeitversetzt, und/oder indem beispielsweise Nachschwingungen des emittierenden Ultraschallwandlers erfasst werden.

Mittels des Empfangssignals wird die Emission des emittierenden Ultraschallwandlers auf mindestens eine Soll-Frequenz geregt. Insbesondere kann bei der Regelung der Emission ein Fehlersignal erzeugt werden und aus diesem Fehlersignal, beispielsweise einer Abweichung von einer Soll-Frequenz, ein Regelsignal für die Anregung des Ultraschallwandlers erzeugt werden. Unter einer Regelung der Emission ist also allgemein eine Beeinflussung, insbesondere eine Regelung, der Anregung des emittierenden Ultraschallwandlers zu verstehen. Diese Beeinflussung kann beispielsweise eine Veränderung der Anregungsfrequenz des emittierenden Ultraschallwandlers, insbesondere während eines Einschwingverlaufs einer gepulsten Anregung, beinhalten. Auch andere Arten der Beeinflussung sind jedoch alternativ oder zusätzlich grundsätzlich möglich.

Mittels des vorgeschlagenen Verfahrens kann insbesondere die Anregungsfrequenz automatisch so geregelt werden, dass der mindestens eine Ultraschallwandler unabhängig von Temperatur, Alterung und anderen Einflussgrößen immer in Resonanz bzw. mit der optimalen Übertragungsfrequenz eines gesamten Systems betrieben wird und/oder mit einem festen Frequenz-Offset zu dieser (Resonanz-)Frequenz. Wird zur Resonanz-Regelung beispielsweise eine Frequenzabweichung als Eingangsgröße verwendet, so ist das Verfahren unabhängig von der Signalamplitude und damit robust gegen Störungen desselben. Damit kann auf die oben beschriebene Erkenntnis reagiert werden, dass der Ultraschallwandler wechselnden Umgebungsbedingungen unterworfen ist, welche die Resonanzfrequenz typischer Ultraschallwandler verändern, wie beispielsweise Temperatureinflüssen. Diese Erkenntnis zeigt sich unter anderem im Einschwingverhalten empfangender Ultraschallwandler, indem deren Frequenz nicht der Anregungsfrequenz des Ultraschallsignals entsprechen. Ein Betrieb in Resonanz ist jedoch vorteilhaft, weil sich dabei die größte Ultraschallamplitude erzielen lässt. Außerdem kann es je nach Auswertung der Empfangssignale vorteilhaft sein, wenn Anrege- und Empfangssignal identische Frequenzen aufweisen. Die Regelung der Anregungsfrequenz kann insbesondere automatisch erfolgen. Die automatische Regelung kann insbesondere derart erfolgen, dass der Ultraschallwandler exakt in Resonanz betrieben wird, beispielsweise mit einem Ziel einer maximalen Schwingungsamplitude, wobei die jeweils erreichte ist-Amplitude, die möglicherweise zusätzlichen Rauschquellen unterworfene ist, nicht notwendigerweise als Rückkopplungsparameter in die Regelungsschleife eingehen muss.

Wenn sich beispielsweise die Resonanzfrequenz ändert, könnte die Anregungsfrequenz auf diese Resonanzfrequenz nachgeregelt werden. Wenn man aber eine auf einer Demodulation beruhende Auswertung verwendet, so kann, alternativ oder zusätzlich, auch beispielsweise eine Demodulationsfrequenz auf die Resonanzfrequenz nachgeregelt werden. Wird beispielsweise eine pulsförmige Anregung verwendet, beispielsweise eine Dirac-impulsförmige Anregung, dann wäre diese auswertungsseitige Nachregelung beispielsweise die einzig vorgenommene Regelung. Alternativ oder zusätzlich können jedoch auch andere Regelungen verwendet werden.

Die Soll-Frequenz kann somit insbesondere eine Resonanzfrequenz des Ultraschallwandlers oder eine zu der Resonanzfrequenz um eine vorgegebene Frequenzverschiebung verschobene Frequenz sein. Beispielsweise kann somit die Soll-Frequenz eine Frequenz sein, bei welcher der Ultraschallwandler selbst eine maximale Schwingungsamplitude aufweist und/oder eine Frequenz, bei welcher eine Übertragung über die Übertragungsstrecke bis hin zum Empfang des Empfangssignals eine maximale Amplitude aufweist. Alternativ oder zusätzlich kann die Soll-Frequenz auch so gewählt werden, dass ein anderes Regelziel erreicht wird. So kann beispielsweise die Soll-Frequenz auch derart gewählt werden, dass eine optimale Übereinstimmung der Anregungsfrequenz mit der Empfangsfrequenz besteht. Wiederum alternativ oder zusätzlich kann die Soll-Frequenz auch derart gewählt werden, dass eine Phase eines Empfangssignals zumindest weitgehend konstant über eine vorgegebene Zeit ist. Wiederum alternativ oder zusätzlich kann die Soll-Frequenz auch beispielsweise eine zu der Resonanzfrequenz um eine vorgegebene Frequenzverschiebung, also einen Frequenz-Offset, verschobene Frequenz sein.

Bei dem Verfahren kann insbesondere eine Frequenz des Empfangssignals bestimmt werden, wobei die Anregungsfrequenz in einem nachfolgenden Emissionsvorgang in einer oder mehrerer der folgenden Weisen gewählt wird. So kann zum einen die Resonanzfrequenz auf die Frequenz des Empfangssignals eingestellt werden, also beispielsweise exakt auf die Frequenz des Empfangssignals geregelt werden, beispielsweise mittels eines entsprechenden Fehlersignals und/oder Regelsignals. Alternativ oder zusätzlich kann die Anregungsfrequenz auch auf eine um eine vorgegebene Frequenzverschiebung gegenüber der Frequenz des Empfangssignals verschobene Frequenz eingestellt werden. Wiederum alternativ oder zusätzlich kann die Anregungsfrequenz auch mittels eines Nachführalgorithmus derart geändert werden, dass sich die Anregungsfrequenz an die Frequenz des Empfangssignals und/oder an eine um eine vorgegebene Frequenzverschiebung gegenüber der Frequenz des Empfangssignals verschobene Frequenz annähert.

Wie oben dargestellt, kann die Regelung insbesondere derart erfolgen, dass ein Fehlersignal erzeugt wird, beispielsweise eine Differenz zwischen der Frequenz des Empfangssignals und der Anregungsfrequenz. Aus diesem Fehlersignal kann ein Regelsignal für die Anregung des Ultraschallwandlers erzeugt werden, beispielsweise nach einem oder mehreren der oben dargestellten Algorithmen. Aus dem Fehlersignal und/oder aus dem Regelsignal kann jedoch weiterhin mindestens eine Information über mindestens eine Einflussgröße, die eine Resonanzfrequenz des Ultraschallwandlers beeinflusst, erzeugt werden. Beispielsweise kann aus dem Fehlersignal und/oder dem Regelsignal auf eine Umgebungstemperatur geschlossen werden, beispielsweise einen über bekannten Zusammenhang zwischen einer Temperatur und der Resonanzfrequenz des Ultraschallwandlers.

Weitere bevorzugte Ausgestaltungen betreffen die Bestimmung einer Frequenz des Empfangssignals. So kann beispielsweise ein Frequenzspektrum des Empfangssignals erzeugt werden, beispielsweise ein Amplitudenspektrum, und aus einem Maximum des Frequenzspektrums, welches gegebenenfalls auch extrapoliert beziehungsweise interpoliert werden kann, auf eine Frequenz des Empfangssignals geschlossen werden.

Alternativ oder zusätzlich kann auch eine Periodizität des Empfangssignals direkt erfasst werden, beispielsweise indem das Empfangssignal als Funktion der Zeit aufgenommen wird. Aus dieser Periodizität kann auf die Frequenz des Empfangssignals geschlossen werden. Beispielsweise können zu diesem Zweck Nulldurchgänge und/oder Maxima und/oder Minima des Empfangssignals erfasst werden, wobei aus einer zeitlichen Differenz dieser Messwerte auf eine Periode des Empfangssignals geschlossen werden kann und aus dieser wiederum auf die Frequenz des Empfangssignals.

Wiederum alternativ oder zusätzlich kann auch eine Phase oder ein Phasenverlauf des Empfangssignals ausgewertet werden. Besonders bevorzugt kann das Verfahren derart durchgeführt werden, dass mindestens eine Phase oder ein Phasenverlauf des Empfangssignals bestimmt wird. Die Soll-Frequenz kann dann insbesondere derart gewählt wird, dass die Phase des Empfangssignals zumindest während einer vorgegebenen Zeit im Wesentlichen konstant bleibt. Beispielsweise kann die Phase lediglich während einer Anfangszeit und/oder eines Einschwingvorgangs eines Wellenpaketes ausgewertet werden. Die Sollfrequenz kann beispielsweise derart gewählt werden, dass die Steigung des Phasenverlaufs vom Betrag her minimal wird.

Die Phase und/oder der Phasenverlauf werden erfindungsgemäßen mittels mindestens eines Demodulationsverfahrens bestimmt. Beispielsweise kann als Demodulationsfrequenz die Anregungsfrequenz gewählt werden. Beispielsweise kann für die Demodulation das Empfangssignal mit zwei um 90° gegeneinander verschobenen Referenzsignalen mit der Demodulationsfrequenz multipliziert werden, gefolgt von einer optionalen Tiefpassfilterung, wobei sich die Phase als trigonometrische Funktion der dadurch erhaltenen Messgrößen ergeben kann.

In diesem Fall ergeben sich insgesamt mindestens zwei, vorzugsweise mindestens drei Frequenzen, nämlich die Anregungsfrequenz, die Soll-Frequenz und optional die Demodulationsfrequenz. Die Demodulationsfrequenz kann beispielsweise gleich der Anregungsfrequenz gewählt werden. Die Anregungsfrequenz wird üblicherweise dem System zunächst vorgegeben und/oder stellt die eigentliche einstellbare Größe dar, beispielsweise die Stellgröße des Ultraschallwandlers. Die Phase, der Phasenverlauf oder eine andere, aus dem Empfangssignal abgeleitete Größe, beispielsweise deren Amplitude, können als Regelgröße verwendet werden, um dann die Anregungsfrequenz derart einzustellen, dass diese der Soll-Frequenz entspricht, beispielsweise der Resonanzfrequenz.

In einer weiteren bevorzugten Ausführungsform des Verfahrens kann eine Korrelation des Empfangssignals gebildet werden. Unter einer Korrelation zweier Funktionen wird dabei allgemein, wie dem Fachmann bekannt ist, eine Funktion verstanden, welche ein zeitliches Integral eines Produkts einer Funktion mit einer Musterfunktion enthält, wobei die Musterfunktion gegenüber der Funktion zeitlich verschoben ist, wobei über die zeitliche Verschiebung integriert wird. Insbesondere kann es sich bei dieser Korrelation um eine Autokorrelation des Empfangssignals mit sich selbst handeln. Eine Autokorrelationsfunktion des Empfangssignals führt als Ergebnis zu einer Funktion, welche Maxima bei den Zeitverschiebungen aufweist, die der Wiederholungsdauer von Erscheinungen im Empfangssignal entsprechen. Aus dieser Wiederholungsdauer lässt sich damit auf die Frequenz des Empfangssignals schließen.

Alternativ oder zusätzlich zu einer Autokorrelation kann auch eine Kreuzkorrelation des zwischen dem Empfangssignal und einem anderen Signal gebildet werden. Bei diesem anderen Signal kann es sich beispielsweise um ein Empfangssignal handeln, welches auf die Emission eines weiteren Ultraschallwandlers zurückgeht. So kann eine Kreuzkorrelation zweier Empfangssignale verschiedener Ultraschallwandler gebildet werden, beispielsweise verschiedener Ultraschallwandler, welche mit derselben Anregungsfrequenz angeregt werden.

Wie oben dargestellt, kann das Empfangssignal mittels verschiedener Verfahren und/oder Vorrichtungen erfasst werden. Beispielsweise kann das Empfangssignal von einem weiteren Ultraschallwandler nach Durchlaufen mindestens einer Übertragungsstrecke erfasst werden. Alternativ oder zusätzlich kann das Empfangssignal auch von dem emittierenden Ultraschallwandler selbst erfasst werden. Insbesondere kann der emittierende Ultraschallwandler dazu in einem Puls-Echo-Betrieb betrieben werden, also einem Betrieb, in welchem nach Aussenden eines Ultraschallpulses der Ultraschallpuls reflektiert und wieder von dem Ultraschallwandler als Echo aufgenommen wird. Alternativ oder zusätzlich kann auch ein Nachschwingsignal des Ultraschallwandlers selbst aufgenommen werden.

Eine weitere bevorzugte Ausgestaltung des Verfahrens betrifft die Wahl der Anregungsfrequenz. So kann insbesondere mindestens eine Einflussgröße erfasst werden, beispielsweise eine Einflussgröße, von welcher bekannt ist, dass diese einen Einfluss auf die Resonanzfrequenz des Ultraschallwandlers beziehungsweise des gesamten Systems hat. Insbesondere kann es sich dabei um eine Temperatur, einen Alterungsgrad, eine Feuchtigkeit, eine Eigenschaft eines umgebenden Mediums oder ähnliche Einflussgrößen handeln oder Kombinationen der genannten oder andere Einflussgrößen. Aus der erfassten Einflussgröße wird mittels eines bekannten Zusammenhangs zwischen der Einflussgröße und der Resonanzfrequenz ein Startwert für die Anregungsfrequenz ermittelt. Diese Ermittlung kann beispielsweise automatisiert erfolgen. Zu diesem Zweck kann beispielsweise der bekannte Zusammenhang analytisch und/oder semi-empirisch oder empirisch bestimmt werden und auf verschiedene Weisen hinterlegt werden beispielsweise in Form eines Kennlinienfeldes und/oder einer elektronischen Tabelle. Gegebenenfalls kann der Startwert für die Anregungsfrequenz geschätzt werden, wobei mittels der oben dargestellten Regelung Restunsicherheiten ausgeglichen werden können.

Wie oben dargestellt, können mittels des vorgeschlagenen Verfahrens auch mehrere Ultraschallwandler betrieben werden. Diese mehreren Ultraschallwandler können beispielsweise Bestandteil eines Gesamtsystems, insbesondere eines Sensorelements, sein. Die mehreren Ultraschallwandler können dabei auch mittels einer einzigen Regelungsschaltung geregelt werden. Dabei können die einzelnen Ultraschallwandler beispielsweise direkt geregelt werden oder es kann eine Systemfrequenz geregelt werden, aus welcher wiederum die Anregungsfrequenzen der Ultraschallwandler abgeleitet werden können.

Wie oben dargestellt, wird neben dem Verfahren in einer oder mehreren der vorgeschlagenen Ausgestaltungen weiterhin eine Vorrichtung mit mindestens einem Ultraschallwandler vorgeschlagen. Die Vorrichtung kann insbesondere ein Sensorelement zur Erfassung mindestens einer Eigenschaft eines fluiden Mediums umfassen und/oder als derartiges Sensorelement ausgestaltet sein. Bei der Eigenschaft des fluiden Mediums kann es sich beispielsweise um einen Füllstand des fluiden Mediums in einem Container und/oder eine Strömungsrate des fluiden Mediums handeln, beispielsweise durch ein Strömungsrohr. Insbesondere kann das Sensorelement als Strömungssensor in einem Ansaug- und/oder Abgastrakt einer Brennkraftmaschine eingesetzt werden.

Die Vorrichtung umfasst mindestens einen Ultraschallwandler, welcher eingerichtet ist, um Ultraschallwellen in das fluide Medium zu emittieren. Weiterhin umfasst die Vorrichtung mindestens einen Kontrollsensor zur Erfassung eines Empfangssignals. Wie oben dargestellt, kann der Kontrollsensor ganz oder teilweise auch bauteilidentisch mit dem Ultraschallwandler sein und/oder auch verschieden von dem Ultraschallwandler ausgestaltet werden. Weiterhin umfasst die Vorrichtung mindestens eine Regelung und ist eingerichtet, um ein Verfahren gemäß einer oder mehreren der oben dargestellten Ausgestaltungen durchzuführen. Die Regelung kann beispielsweise eine oder mehrere elektronische Regelkomponenten umfassen. Wiederum alternativ oder zusätzlich kann die Regelung auch ein oder mehrere Datenverarbeitungsgeräte umfassen, beispielsweise Datenverarbeitungsgeräte, welche programmtechnisch eingerichtet sind, um ein erfindungsgemäßes Verfahren durchzuführen.

### Kurze Beschreibung der Figuren:

Ausführungsbeispiele der Erfindung sind in den Figuren dargestellt und werden in der nachfolgenden Beschreibung näher erläutert.

Es zeigen:
- Figur 1: ein vereinfachtes Blockschaltbild einer Vorrichtung zur Durchführung eines erfindungsgemäßen Verfahrens;
- Figur 2: einen prinzipiellen Ablauf einer Frequenzregelung der Anregungsfrequenz;
- Figur 3: ein Beispiel eines Regelkreises zur Regelung des Anregungssignals von Ultraschallwandlern;
- Figur 4: ein Beispiel einer Übertragungsstrecke von Ultraschallsignalen;
- Figur 5: eine Schaltung zur Schätzung der Intervalldauer von Ultraschallpulsen mit Hilfe ihrer Korrelationsfunktion; und
- Figur 6: eine Kreuzkorrelationsfunktion zweier Ultraschallpulse zur Bestimmung der Periodendauer Tᵤ aus dem Abstand benachbarter Korrelationsmaxima oder Nulldurchgänge.

### Ausführungsbeispiele

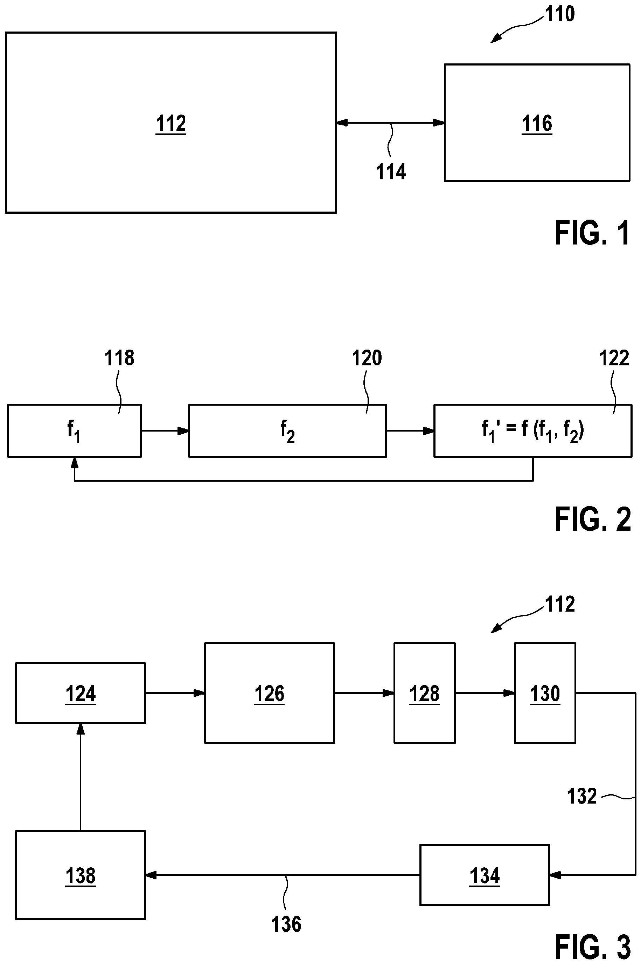

In Figur 1 ist ein stark vereinfachtes Blockschaltbild einer Vorrichtung zur Durchführung eines erfindungsgemäßen Verfahrens gezeigt, welche beispielsweise als Sensorelement 110 zur Erfassung mindestens einer Eigenschaft eines fluiden Mediums ausgestaltet sein kann. Das Sensorelement 110 umfasst eine Regelung 112, beispielsweise in Form einer elektronischen Regelungsschaltung. Diese kann ganz oder teilweise mittels Hardware-Komponenten oder auch ganz oder teilweise mit Software-Komponenten aufgebaut sein. Die elektronische Regelungsschaltung kann beispielsweise integrierte und/oder angeschlossene Module umfassen. diese Module können beispielsweise für die Erzeugung mindestens eines Anregungssignals Sorge tragen. Weiterhin kann, alternativ oder zusätzlich, eine einstellbare Taktgenerierung vorgesehen sein. Wiederum alternativ oder zusätzlich können ein oder mehrere Eingänge für Empfangssignale vorgesehen sein. Weiterhin kann ein Rechenwerk vorgesehen sein, beispielsweise ein analoges und/oder digitales Rechenwerk. Insbesondere kann ein digitales Rechenwerk mit mindestens einem Analog-Digital-Wandler vorgesehen sein. Das Rechenwerk kann ganz oder teilweise als Datenverarbeitungsvorrichtung ausgestaltet sein. Weiterhin kann, alternativ oder zusätzlich, mindestens ein Modul für eine Ergebnisausgabe vorgesehen sein. Die Regelung 112 ist über mindestens eine Schnittstelle 114 mit einem Ultraschallwandler 116 verbunden. Dieser Ultraschallwandler 116 kann insbesondere eine a priori nicht bekannte Resonanzfrequenz aufweisen.

In Figur 2 ist exemplarisch ein prinzipieller Ablauf einer Frequenzregelung des Ultraschallwandlers 116 dargestellt. So erfolgt in Schritt 118 eine Anregung des Ultraschallwandlers 116 mit einem Anregungssignal, beispielsweise einem gepulsten Anregungssignal. Auch eine wiederholte Anregung, beispielsweise mit periodisch wiederholenden Anregungssignalen, ist möglich. Die Anregung erfolgt mit einer Anregungsfrequenz, welche in Figur 2 mit f₁ bezeichnet ist.

Daraufhin wird in Verfahrensschritt 120 eine Frequenz f₂ eines Empfangssignals bestimmt, welche im Folgenden auch als Empfangsfrequenz bezeichnet wird. In Verfahrensschritt 122 wird daraus dann ein neuer Wert f₁' für die Anregungsfrequenz bestimmt, welcher eine Funktion der ursprünglichen Anregungsfrequenz f₁ und der Empfangsfrequenz f₂ ist. Dieser Wert wird anstelle der ursprünglichen Anregungsfrequenz f₁ verwendet.

Die Erfindung umfasst somit eine Möglichkeit, die Anregungsfrequenz des mindestens einen Ultraschallwandlers 116 einzustellen. Mit Hilfe der Regelung 112 kann die Übertragung des Ultraschallsignals optimiert werden, indem die Anregung mit der Resonanzfrequenz des Ultraschallwandlers 116 erfolgt und/oder mit einem definierten Offset zur Resonanzfrequenz. Ein entsprechendes Regelsignal für eine Anregungsschaltung kann aus einem Fehlersignal abgeleitet werden, das heißt aus der Abweichung eines durch die Anregung ausgelösten Ultraschallsignals von einer Zielgröße, beispielsweise die Abweichung der Empfangsfrequenz f₂ von der Anregungsfrequenz f₁ in Figur 2. Die Frequenz des nächsten Anregungsvorgangs kann so zum Beispiel entsprechend der gemessenen Empfangsfrequenz gewählt werden und/oder in einem Nachführalgorithmus folgend so geändert werden, dass sie sich der gemessenen Ultraschall-Empfangsfrequenz f₂ immer weiter annähert bzw. dieser folgt.

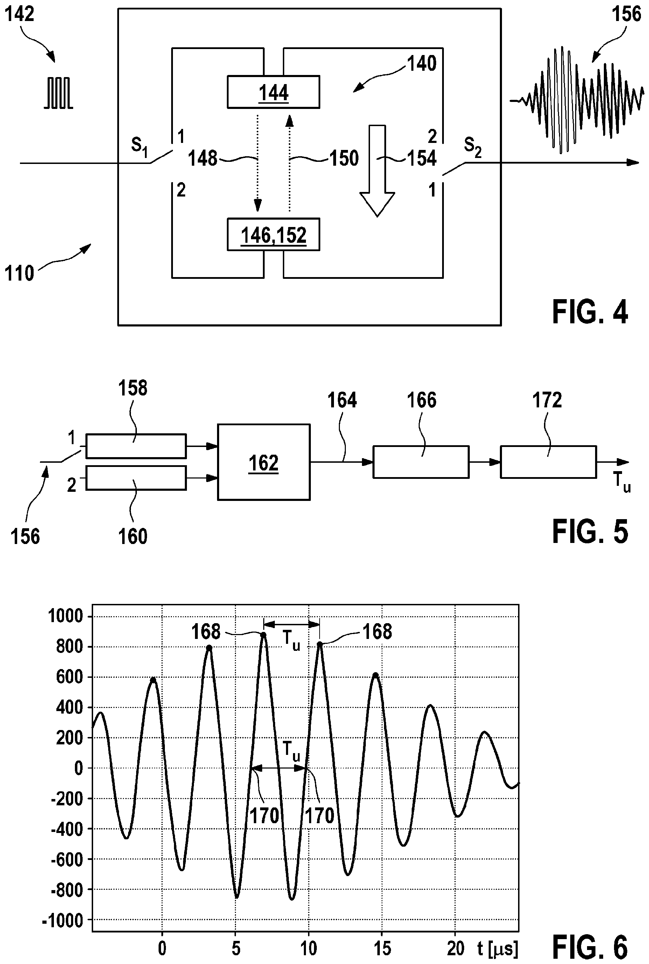

In Figur 3 ist ein Ausführungsbeispiel des in Figur 2 prinzipiell dargestellten Verfahrens gezeigt. Hierbei wird zunächst in Verfahrensschritt 124 ein Anregungssignal erzeugt. Hieraus entsteht ein Ultraschallsignal, welches über eine Übertragungsstrecke übertragen wird (Verfahrensschritt 126). Diese Übertragungsstrecke wird unten noch anhand der Figur 4 exemplarisch näher ausgeführt und kann beispielsweise den Ultraschallwandler 116 selbst und/oder eine Laufstrecke, beispielsweise eine Laufstrecke durch Luft, und/oder einen zweiten Ultraschallwandler umfassen.

In Schritt 128 kann eine Ermittlung der Frequenz f₂ des Empfangssignals, also der Empfangsfrequenz, erfolgen. Dies kann beispielsweise über einen Pulsfrequenz-Schätzer erfolgen, welcher beispielsweise auch programmtechnisch implementiert sein kann. Anschließend kann in Verfahrensschritt 130 eine Ermittlung eines Frequenzfehlers erfolgen. Dies kann beispielsweise, wie unten noch näher ausgeführt wird, mittels einer Differenzbildung zwischen der Empfangsfrequenz und der Anregungsfrequenz aus Schritt 124 erfolgen. Aus dieser Ermittlung des Frequenzfehlers in Schritt 130 wird ein Fehlersignal 132 erzeugt, welches optional einer Filterung 134 unterzogen werden kann, beispielsweise einer Filterung in einem Schleifenfilter (Loop-Filter). In diesem Verfahrensschritt 134 kann, alternativ oder zusätzlich zu einer Filterung, auch eine andere Art der Verarbeitung des Fehlersignals 132 erfolgen. So kann beispielsweise das Fehlersignal 132 verstärkt und/oder invertiert und/oder auf andere Weise aufbereitet werden, so dass schließlich ein Regelsignal 136 erzeugt wird. Dieses Regelsignal 136 wird entweder direkt zur Erzeugung des Anregungssignals in Schritt 124 verwendet und/oder in eine Anregungssteuerung 138 eingespeist. Diese Anregungssteuerung 138 kann beispielsweise eine für die Anregung von Ultraschallpulsen erforderliche Hardware enthalten. Beispielsweise kann die Anregungssteuerung 138 mindestens einen digital gesteuerten Oszillator (Digitally Controlled Oscillator, DCO) und/oder einen numerisch gesteuerten Oszillator (Numerically Controlled Oscillator, NCO) und/oder einen spannungsgesteuerten Oszillator (Voltage Controlled Oscillator, VCO) umfassen. Mittels dieser Anregungssteuerung 138 wird dann wiederum das Anregungssignal erzeugt, Schritt 124. Das Verfahren kann schrittweise oder kontinuierlich wiederholt durchgeführt werden.

Die Ermittlung der Empfangsfrequenz in Verfahrensschritt 128 und/oder die Ermittlung des Frequenzfehlers in 130 können auf verschiedene Weisen erfolgen, die auch zusammengefasst bzw. kombiniert eingesetzt werden können. So kann zum einen eine Transformation des Empfangssignals vom Zeit- in den Frequenzbereich erfolgen. Hierfür kann beispielsweise eine schnelle Fourier-Transformation (Fast Fourier Transformation, FFT) eingesetzt werden. Die Empfangsfrequenz entspricht dann dem Maximum des Amplitudenspektrums, welches, falls erforderlich, auch durch eine Interpolation und/oder eine Extrapolation bestimmt werden kann. Alternativ oder zusätzlich kann die Periodizität des Empfangssignals ausgewertet werden, zum Beispiel anhand dessen Maxima, Minima oder Nulldurchgängen. Auch eine Kombination der genannten Möglichkeiten ist realisierbar.

Wiederum alternativ oder zusätzlich kann, wie unten noch näher exemplarisch ausgeführt wird, auch eine Korrelation des Ultraschallsignals mit sich selbst (Autokorrelationsfunktion) und/oder mit anderen Signalen erfolgen, wie beispielsweise dem Empfangssignal eines anderen Ultraschallwandlers (Kreuzkorrelationsfunktion). Diese Korrelation kann gefolgt werden von einer anschließenden Auswertung der Periodizität des Korrelationsergebnisses. Wiederum alternativ oder zusätzlich kann auch ein Phasenverlauf im Empfangssignal ausgewertet werden. Dabei kann allgemein die Empfangsfrequenz innerhalb eines wählbaren Intervalls bestimmt werden, vorzugsweise während eines Einschwingvorgangs des jeweiligen Kontrollsensors, beispielsweise eines Empfangswandlers, welcher das Empfangssignal aufnimmt. Das Empfangssignal stellt somit eine Frequenzantwort nach Durchlaufen der Übertragungsstrecke dar (siehe Schritt 126 in Figur 3).

In Figur 4 ist ausschnittsweise und schematisch ein Teil der Vorrichtung zur Durchführung des Verfahrens, insbesondere eines Sensorelements 110, dargestellt, wobei anhand dieser Figur Details der Übertragungsstrecke 140 erläutert werden sollen. Ausgangspunkt ist ein Anregungssignal, welches in Figur 4 mit der Bezugsziffer 142 bezeichnet wird. Beispielsweise kann es sich dabei um ein gepulstes Anregungssignal handeln, beispielsweise eine Folge von drei bis fünf Schwingungen, beispielsweise mit einem rechteckförmigen Verlauf. Das Sensorelement 110 umfasst in diesem Ausführungsbeispiel zwei Ultraschallwandler 144, 146, welche beispielsweise gleichartig oder auch verschiedenartig ausgestaltet werden können. Das Anregungssignal 142 kann beispielsweise über einen in Figur 4 mit S₁ bezeichneten ersten Schalter auf den Ultraschallwandler 144 aufgegeben werden, welcher somit in dem dargestellten Ausführungsbeispiel als emittierender Ultraschallwandler wirkt und ein Signal 148 in Form von Ultraschallwellen emittiert. Entsprechend würde in einer in Figur 4 mit 2 bezeichneten Schaltstellung der Ultraschallwandler 146 emittieren und ein Ultraschallsignal 150 emittieren. Beispielsweise kann zwischen den Schaltstellungen 1 und 2 hin- und hergeschaltet werden. Im Folgenden soll jedoch von der Schaltstellung 1 des Schalters S₁ ausgegangen werden, in welcher der Ultraschallwandler 144 der emittierende Ultraschallwandler ist, und in welcher der Ultraschallwandler 146 als Kontrollsensor 152 wirkt, welcher ein Empfangssignal entsprechend dem Signal 148 aufnimmt. Im Falle der Schaltstellung 2 des Schalters S₁ wird entsprechend der Ultraschallwandler 144 zum Kontrollsensor 152. Alternativ oder zusätzlich können jedoch auch weitere Kontrollsensoren vorgesehen sein. Die Signalantwort auf das Signal 148, also das Empfangssignal, wird durch die Übertragungsstrecke 140 beeinflusst. Beispielsweise kann eine Strecke zwischen den Ultraschallwandlern 144, 146 von Luft oder einem anderen fluiden Medium durchströmt sein, was in Figur 4 mit der Bezugsziffer 154 bezeichnet ist.

Über den Schalter S₂ wird in dem dargestellten Ausführungsbeispiel das mit der Bezugsziffer 156 bezeichnete Empfangssignal erfasst. Der Schalter S₁ und der Schalter S₂ werden dabei vorzugsweise Gegentaktik betrieben, wie in Figur 4 dargestellt, so dass jeweils einer der Ultraschallwandler 144, 146 als emittierender Ultraschallwandler betrieben wird (in der Schaltstellung in Figur 4 der Ultraschallwandler 144) und der jeweils andere als Kontrollsensor 152 (in Figur 4 der Ultraschallwandler 146). Die Frequenzantwort des als Übertragungsstrecke 140 wirkenden Ultraschallkanals wird sowohl durch seine Anregungsfrequenz als auch durch die Übertragungsstrecke 140 selbst und durch die Resonanzfrequenz der Ultraschallwandler 144, 146 bestimmt.

In den Figuren 5 und 6 sind verschiedene Ausführungsbeispiele von Verfahren und Anordnungen gezeigt, mittels derer das Empfangssignal 156, beispielsweise gemäß der Anordnung in Figur 4, ausgewertet werden kann. So kann das Empfangssignal 156 beispielsweise zunächst in digitalisierter Form aufgenommen werden. Dabei kann bei der Aufnahme zwischen den Schaltstellungen 1 und 2 der Schalter S₁ und S₂ hin- und hergeschaltet werden, so dass die Ultraschallwandler 144, 146 abwechselnd als emittierende Ultraschallwandler und als Kontrollsensoren fungieren. Diese abwechselnd aufgenommenen digitalisierten Empfangssignale der Ultraschallwandler 144, 146 können in Registern 158, 160 gespeichert werden. Wird lediglich einer der Ultraschallwandler 144, 146 in Figur 4 als Emitter verwendet, und eine anderer als Kontrollsensor 152, also bei einer festen Schaltstellung der Schalter S₁, S₂, so kann auch lediglich ein Register 158 verwendet werden.

Anschließend wird in Verfahrensschritt 162 eine Korrelationsfunktion gebildet. Dies kann beispielsweise eine Kreuzkorrelationsfunktion zwischen den Empfangssignalen der Ultraschallwandler 144, 146 in den Registern 150 und 160 sein. Alternativ oder zusätzlich kann auch eine Autokorrelationsfunktion lediglich eines der Empfangssignale gebildet werden. Das so gebildete Korrelationssignal 164 wird dann in Verfahrensschritt 166 ausgewertet, um die Empfangsfrequenz des Empfangssignals 156 zu bestimmen. Dies kann beispielsweise dadurch erfolgen, dass die Maxima und/oder die Minima oder die Nulldurchgänge dieses Korrelationssignals 164 bestimmt werden. Dies ist in Figur 6 exemplarisch dargestellt. Gezeigt ist hier ein Korrelationssignal in willkürlichen Einheiten als Funktion der Zeit t in Mikrosekunden. Exemplarisch werden hier die Maxima 168 und/oder die Nulldurchgänge 170 ermittelt. Beispielsweise kann es sich bei der dargestellten Funktion in Figur 6 um eine Kreuzkorrelationsfunktion handeln. Anschließend wird in Figur 5 aus den derart bestimmten charakteristischen Punkten, beispielsweise den Maxima, den Minima, den Nulldurchgängen und/oder anderen Punkten, aus welchen sich eine Periode des Signals in Figur 6 bestimmen lässt, die der Abstand zwischen diesen Punkten bestimmt. Dieser Abstand ist in Figur 6 mit Tᵤ bezeichnet und stellt eine Periodendauer dar. Aus dem Kehrwert dieser Periodendauer Tᵤ kann die Empfangssignalfrequenz ermittelt werden.

Das in den Figuren 5 und 6 beschriebene Verfahren kann in verschiedener Weise abgewandelt werden. Wird beispielsweise eine Kreuzkorrelation durchgeführt, so können die beiden Pulse in zeitlicher Folge in gleicher oder entgegengesetzter Richtung über den Ultraschallkanal in Figur 4 übertragen werden. Die Periodizität der Ultraschallpulse findet sich als Funktion der Verschiebung in der Korrelationsfunktion in Figur 6 wieder. Die Periodendauer der Ultraschallpulse Tᵤ kann auch aus anderen Größen als den Nulldurchgängen, den Maxima oder den Minima in Figur 5 bestimmt werden. Insbesondere wenn die Ultraschall-Signalamplitude neben der Anregungsfrequenz nicht wesentlich von Störgrößen beeinflusst wird, kann auch die Amplitude des Empfangssignals selbst als Eingangsgröße eines Reglers verwendet werden, welcher sie maximiert.

Sofern der Zusammenhang zwischen den wichtigsten Einflussgrößen und der Resonanzfrequenz, beispielsweise ein Zusammenhang zwischen einer Umgebungstemperatur und der Resonanzfrequenz, wenigstens ungefähr bekannt ist, können diese Einflussgrößen allgemein auch gemessen werden und als Startwert für den ersten Anregungsvorgang und/oder als Plausibilisierung der Anregungsfrequenz-Regelung verwendet werden. So kann aus diesen Einflussgrößen beispielsweise die Resonanzfrequenz mittels eines Kennfeldes und/oder einer Rechenvorschrift abgeschätzt werden.

Die mindestens eine eingeregelte Resonanzfrequenz kann allgemein als Eingangsgröße für weitere Rechenalgorithmen verwendet werden. So kann beispielsweise bei einem bekannten und/oder monotonen Zusammenhang zwischen der Resonanzfrequenz und einer Einflussgröße, beispielsweise einem Umgebungsfluss, aus diesem Zusammenhang eine Information dieser Einflussgröße ausgegeben werden, zum Beispiel in Form einer Temperatur der Ultraschallwandler bzw. der Umgebung und/oder in Form einer Information über diese Temperatur.

Das Ultraschallsignal selbst kann bei allen Realisierungsvarianten sowohl vom elektrisch angeregten Ultraschallwandler 144 selbst empfangen werden, beispielsweise im Puls-Echo-Betrieb. Alternativ oder zusätzlich kann der Empfang auch, wie in Figur 4 dargestellt, von mindestens einem anderen Ultraschallwandler 146 durchgeführt werden, welcher dann als Kontrollsensor 152 wirkt. Wiederum alternativ kann auch das Nachschwingen des zuvor elektrisch angeregten Ultraschallwandlers 144, 146 ausgewertet werden.

Die Regelung der Resonanzfrequenz von mehreren Ultraschallwandlern 144, 146 kann insbesondere auch in einer einzigen Regelungsschaltung durchgeführt werden. Dabei kann direkt die Frequenz des Anregungssignals geregelt werden und/oder eine Systemfrequenz, von der die Anregung wiederum abgeleitet wird, beispielsweise in Form eines Teilers dieser Systemfrequenz.

Die in Figur 1 schematisch dargestellte Vorrichtung zur Durchführung eines erfindungsgemäßen Verfahrens, insbesondere ein Sensorelement 110, kann in verschiedenen Weisen eingesetzt werden. So kann das Sensorelement 110 insbesondere in der Ultraschall-Durchflussmessung eingesetzt werden. Alternativ oder zusätzlich kann die Erfindung überall dort vorteilhaft eingesetzt werden, wo Ultraschallwandler elektrisch betrieben werden, zum Beispiel in einer Einparkhilfe im Automobil, zur Abstandsmessung in der Automatisierungstechnik oder in ähnlichen Vorrichtungen.

## Patentansprüche

1. Verfahren zum Betrieb mindestens eines Ultraschallwandlers (116; 144, 146), wobei der Ultraschallwandler (116; 144, 146) mit einer Anregungsfrequenz zu einer Emission von Ultraschallwellen angeregt wird, wobei mindestens ein Empfangssignal (156) von mindestens einem Kontrollsensor (152) erfasst wird, wobei die Emission mittels des Empfangssignals (156) auf mindestens eine Soll-Frequenz geregelt wird, **dadurch gekennzeichnet, dass** eine Phase oder ein Phasenverlauf des Empfangssignals (156) als Regelgröße zur Einstellung der Anregungsfrequenz verwendet wird, und wobei die Phase oder der Phasenverlauf des Empfangssignals mittels eines Demodulationsverfahrens bestimmt wird.

2. Verfahren nach dem vorhergehenden Anspruch, wobei bei der Regelung der Emission ein Fehlersignal (132) erzeugt wird und aus diesem Fehlersignal (132) ein Regelsignal (136) für die Anregung des Ultraschallwandlers (116; 144, 146) erzeugt wird.

3. Verfahren nach dem vorhergehenden Anspruch, wobei aus dem Fehlersignal (132) und/oder dem Regelsignal (136) mindestens eine Information über mindestens eine Einflussgrösse, die eine Resonanzfrequenz des Ultraschallwandlers (116; 144, 146) beeinflusst, erzeugt wird.

4. Verfahren nach einem der vorhergehenden Ansprüche, wobei die Soll-Frequenz eine Resonanzfrequenz des Ultraschallwandlers (116; 144, 146) oder eine zu der Resonanzfrequenz um eine vorgegebene Frequenzverschiebung verschobene Frequenz ist.

5. Verfahren nach einem der vorhergehenden Ansprüche, wobei eine Frequenz des Empfangssignals (156) bestimmt wird, wobei die Anregungsfrequenz in einem nachfolgenden Emissionsvorgang in einer oder mehreren der folgenden Weisen gewählt wird:
- die Anregungsfrequenz wird auf die Frequenz des Empfangssignals (156) eingestellt;
- die Anregungsfrequenz wird auf eine um eine vorgegebene Frequenzverschiebung gegenüber der Frequenz des Empfangssignals (156) verschobene Frequenz eingestellt;
- die Anregungsfrequenz wird mittels eines Nachführalgorithmus derart geändert, dass sich die Anregungsfrequenz an die Frequenz des Empfangssignals (156) annähert;
- die Anregungsfrequenz wird mittels eines Nachführalgorithmus derart geändert, dass sich die Anregungsfrequenz an eine um eine vorgegebene Frequenzschiebung gegenüber der Frequenz des Empfangssignals (156) verschobene Frequenz annähert.

6. Verfahren nach einem der vorhergehenden Ansprüche, wobei ein Frequenzspektrum des Empfangssignals (156) erzeugt wird und aus einem Maximum und/oder einem Minimum und/oder einem Nulldurchgang des Frequenzspektrums auf eine Frequenz des Empfangssignals (156) geschlossen wird.

7. Verfahren nach einem der vorhergehenden Ansprüche, wobei eine Periodizität des Empfangssignals (156) erfasst wird und aus dieser Periodizität auf die Frequenz des Empfangssignals (156) geschlossen wird.

8. Verfahren nach einem der vorhergehenden Ansprüche, wobei eine Demodulationsfrequenz des Demodulationsverfahrens gleich der Anregungsfrequenz gewählt wird.

9. Verfahren nach einem der vorhergehenden Ansprüche, wobei die Soll-Frequenz derart gewählt wird, dass die Phase des Empfangssignals zumindest während einer vorgegebenen Zeit im Wesentlichen konstant bleibt.

10. Verfahren nach einem der vorhergehenden Ansprüche, wobei eine Korrelation des Empfangssignals (156) gebildet wird und aus der Korrelation auf eine Frequenz des Empfangssignals (156) geschlossen wird.

11. Verfahren nach dem vorhergehenden Anspruch, wobei die Korrelation eine Autokorrelation des Empfangssignals (156) und/oder eine Kreuzkorrelation zweier Empfangssignale (156) verschiedener Ultraschallwandler (116; 144, 146) umfasst.

12. Verfahren nach einem der vorhergehenden Ansprüche, wobei das Empfangssignal (156) mittels einer oder mehrere der folgenden Verfahren erfasst wird:
- das Empfangssignal (156) wird von einem weiteren Ultraschallwandler (116; 144, 146) nach Durchlaufen mindestens einer Übertragungsstrecke (140) erfasst;
- das Empfangssignal (156) wird von dem emittierenden Ultraschallwandler (116; 144, 146) selbst erfasst, insbesondere in einem Puls-Echo-Betrieb und/oder in aus einem Nachschwingsignal.

13. Verfahren nach einem der vorhergehenden Ansprüche, wobei mindestens eine Einflussgrösse erfasst wird, wobei die Einflussgrösse eine Resonanzfrequenz des Ultraschallwandlers (116; 144, 146) beeinflusst, wobei aus der erfassten Einflussgrösse mittels eines bekannten Zusammenhangs zwischen der Einflussgrösse und der Resonanzfrequenz ein Startwert für die Anregungsfrequenz ermittelt wird.

14. Verfahren nach einem der vorhergehenden Ansprüche, wobei mehrere Ultraschallwandler (116; 144, 146) mittels einer einzigen Regelung (112) geregelt werden, wobei die einzelnen Ultraschallwandler (116; 144, 146) direkt geregelt werden oder eine Systemfrequenz geregelt wird, aus welcher die Anregungsfrequenzen der Ultraschallwandler (116; 144, 146) abgeleitet werden.

15. Vorrichtung, insbesondere Sensorelement (110), zur Erfassung mindestens einer Eigenschaft eines fluiden Mediums, umfassend mindestens einen Ultraschallwandler (116; 144, 146), wobei der Ultraschallwandler (116; 144, 146) eingerichtet ist, um Ultraschallwellen (116; 144, 146) zu emittieren, wobei die Vorrichtung weiterhin mindestens einen Kontrollsensor (152) zur Erfassung eines Empfangssignals (156) umfasst, wobei die Vorrichtung weiterhin mindestens eine Regelung (112) umfasst und eingerichtet ist, um ein Verfahren nach einem der vorhergehenden Ansprüche durchzuführen.

## Claims

1. Method for operating at least one ultrasonic transducer (116; 144, 146), wherein the ultrasonic transducer (116; 144, 146) is excited at an excitation frequency to produce an emission of ultrasonic waves, wherein at least one received signal (156) is registered by at least one control sensor (152), wherein the emission is regulated to at least one setpoint frequency by means of the received signal (156), **characterized in that** a phase or a phase profile of the received signal (156) is used as a controlled variable for setting the excitation frequency, and wherein the phase or the phase profile of the received signal is determined by means of a demodulation method.

2. Method according to the preceding claim, wherein the regulation of the emission involves an error signal (132) being produced and a control signal (136) for the excitation of the ultrasonic transducer (116; 144, 146) being produced from this error signal (132).

3. Method according to the preceding claim, wherein at least one piece of information about at least one influencing variable that influences a resonant frequency of the ultrasonic transducer (116; 144, 146) is produced from the error signal (132) and/or the control signal (136).

4. Method according to one of the preceding claims, wherein the setpoint frequency is a resonant frequency of the ultrasonic transducer (116; 144; 146) or a frequency shifted in relation to the resonant frequency by a prescribed frequency shift.

5. Method according to one of the preceding claims, wherein a frequency of the received signal (156) is determined, wherein the excitation frequency is chosen in a subsequent emission process in one or more of the following ways:
- the excitation frequency is set to the frequency of the received signal (156);
- the excitation frequency is set to a frequency shifted by a prescribed frequency shift in comparison with the frequency of the received signal (156);
- the excitation frequency is changed by means of a tracking algorithm such that the excitation frequency approaches the frequency of the received signal (156);
- the excitation frequency is changed by means of a tracking algorithm such that the excitation frequency approaches a frequency shifted by a prescribed frequency shift in comparison with the frequency of the received signal (156).

6. Method according to one of the preceding claims, wherein a frequency spectrum of the received signal (156) is produced and a maximum and/or a minimum and/or a zero crossing of the frequency spectrum is/are used to infer a frequency of the received signal (156).

7. Method according to one of the preceding claims, wherein a periodicity of the received signal (156) is registered and this periodicity is used to infer the frequency of the received signal (156).

8. Method according to one of the preceding claims, wherein a demodulation frequency of the demodulation method is chosen to be equal to the excitation frequency.

9. Method according to one of the preceding claims, wherein the setpoint frequency is chosen such that the phase of the received signal remains substantially constant at least during a prescribed time.

10. Method according to one of the preceding claims, wherein a correlation of the received signal (156) is formed and the correlation is used to infer a frequency of the received signal (156).

11. Method according to the preceding claim, wherein the correlation comprises an autocorrelation of the received signal (156) and/or a cross correlation of two received signals (156) from different ultrasonic transducers (116; 144, 146).

12. Method according to one of the preceding claims, wherein the received signal (156) is registered by means of one or more of the following methods:
- the received signal (156) is registered by a further ultrasonic transducer (116; 144, 146) after passing through at least one transmission link (140);
- the received signal (156) is registered by the emitting ultrasonic transducer (116; 144, 146) itself, particularly in a pulse-echo mode and/or in from a ringing signal.

13. Method according to one of the preceding claims, wherein at least one influencing variable is registered, wherein the influencing variable influences a resonant frequency of the ultrasonic transducer (116; 144, 146), wherein a starting value for the excitation frequency is ascertained from the registered influencing variable by means of a known relationship between the influencing variable and the resonant frequency.

14. Method according to one of the preceding claims, wherein multiple ultrasonic transducers (116; 144, 146) are regulated by means of a single closed-loop controller (112), wherein the individual ultrasonic transducers (116; 144, 146) are regulated directly or a system frequency from which the excitation frequencies of the ultrasonic transducers (116; 144, 146) are derived is regulated.

15. Apparatus, particularly sensor element (110), for registering at least one property of a fluid medium, comprising at least one ultrasonic transducer (116; 144, 146), wherein the ultrasonic transducer (116; 144, 146) is set up to emit ultrasonic waves (116; 144, 146), wherein the apparatus furthermore comprises at least one control sensor (152) for registering a received signal (156), wherein the apparatus furthermore comprises at least one closed-loop controller (112) and is set up to perform a method according to one of the preceding claims.

## Revendications

1. Procédé pour faire fonctionner au moins un transducteur ultrasonique (116 ; 144, 146), le transducteur ultrasonique (116 ; 144, 146) étant excité à une fréquence d'excitation pour produire une émission d'ondes ultrasoniques, au moins un signal reçu (156) étant détecté par au moins un capteur de contrôle (152), l'émission étant régulée à au moins une fréquence de consigne au moyen du signal reçu (156), **caractérisé en ce qu'**une phase ou une courbe de phase du signal reçu (156) est utilisée en tant que grandeur de régulation pour le réglage de la fréquence d'excitation, et la phase ou la courbe de phase du signal reçu étant déterminée au moyen d'un processus de démodulation.

2. Procédé selon la revendication précédente, un signal de défaut (132) étant généré lors de la régulation de l'émission et un signal de régulation (136) pour l'excitation du transducteur ultrasonique (116 ; 144, 146) étant généré à partir de ce signal de défaut (132).

3. Procédé selon la revendication précédente, au moins une information relative à au moins une grandeur influente, qui influence une fréquence de résonance du transducteur ultrasonique (116 ; 144, 146), étant générée à partir du signal de défaut (132) et/ou du signal de régulation (136).

4. Procédé selon l'une des revendications précédentes, la fréquence de consigne étant une fréquence de résonance du transducteur ultrasonique (116 ; 144, 146) ou une fréquence décalée d'un décalage en fréquence prédéfini par rapport à la fréquence de résonance.

5. Procédé selon l'une des revendications précédentes, une fréquence du signal reçu (156) étant déterminée, la fréquence d'excitation dans une opération d'émission suivante étant sélectionnée de l'une ou plusieurs des manières ci-après :
- la fréquence d'excitation est réglée à la fréquence du signal reçu (156) ;
- la fréquence d'excitation est réglée à une fréquence décalée d'un décalage en fréquence prédéfini par rapport à la fréquence du signal reçu (156) ;
- la fréquence d'excitation est modifiée au moyen d'un algorithme de suivi de telle sorte que la fréquence d'excitation se rapproche de la fréquence du signal reçu (156) ;
- la fréquence d'excitation est modifiée au moyen d'un algorithme de suivi de telle sorte que la fréquence d'excitation se rapproche d'une fréquence décalée d'un décalage en fréquence prédéfini par rapport à la fréquence du signal reçu (156).

6. Procédé selon l'une des revendications précédentes, un spectre de fréquences du signal reçu (156) étant généré et une fréquence du signal reçu (156) étant déduite à partir d'un maximum et/ou d'un minimum et/ou d'un passage par zéro du spectre de fréquences.

7. Procédé selon l'une des revendications précédentes, une périodicité du signal reçu (156) étant détectée et la fréquence du signal reçu (156) étant déduite à partir de cette périodicité.

8. Procédé selon l'une des revendications précédentes, une fréquence de démodulation du procédé de démodulation étant choisie identique à la fréquence d'excitation.

9. Procédé selon l'une des revendications précédentes, la fréquence de consigne étant sélectionnée de telle sorte que la phase du signal reçu reste sensiblement constante au moins pendant une durée prédéfinie.

10. Procédé selon l'une des revendications précédentes, une corrélation du signal reçu (156) étant formée et une fréquence du signal reçu (156) étant déduite à partir de la corrélation.

11. Procédé selon l'une des revendications précédentes, la corrélation comprenant une autocorrélation du signal reçu (156) et/ou une corrélation croisée de deux signaux reçus (156) de différents transducteurs ultrasoniques (116 ; 144, 146).

12. Procédé selon l'une des revendications précédentes, le signal reçu (156) étant détecté au moyen d'un ou plusieurs des procédés suivants :
- le signal reçu (156) est détecté par un transducteur ultrasonique (116 ; 144, 146) supplémentaire après avoir traversé au moins un trajet de transmission (140) ;
- le signal reçu (156) est détecté par le transducteur ultrasonique (116 ; 144, 146) émetteur lui-même, notamment dans un fonctionnement à écho d'impulsion et/ou dans à partir d'un signal de post-oscillation.

13. Procédé selon l'une des revendications précédentes, au moins une grandeur influente étant détectée, la grandeur influente influençant une fréquence de résonance du transducteur ultrasonique (116 ; 144, 146), une valeur de départ pour la fréquence d'excitation étant déterminée à partir de la grandeur influente détectée au moyen d'une relation mutuelle connue entre la grandeur influente et la fréquence de résonance.

14. Procédé selon l'une des revendications précédentes, plusieurs transducteurs ultrasoniques (116 ; 144, 146) étant régulés au moyen d'une régulation (112) unique, les transducteurs ultrasoniques (116 ; 144, 146) individuels étant régulés directement ou une fréquence de système étant régulée, de laquelle sont dérivées les fréquences d'excitation des transducteurs ultrasoniques (116 ; 144, 146).

15. Dispositif, notamment élément de détection (110), destiné à détecter au moins une propriété d'un milieu fluide, comprenant au moins un transducteur ultrasonique (116 ; 144, 146), le transducteur ultrasonique (116 ; 144, 146) étant conçu pour émettre des ondes ultrasoniques (116 ; 144, 146), le dispositif comprenant en outre un capteur de contrôle (152) destiné à détecter un signal reçu (156), le dispositif comprenant en outre au moins une régulation (112) et étant conçu pour mettre en oeuvre un procédé selon l'une des revendications précédentes.
